# EUROPÄISCHE PATENTSCHRIFT

(11) **EP 2 553 405 B1**
(45) Veröffentlichungstag und Bekanntmachung des Hinweises auf die Patenterteilung: **01.11.2017**
(21) Anmeldenummer: 11712453.7
(22) Anmeldetag: 24.03.2011
(51) Int. Cl.: G01G 19/02, G01G 23/01

(54) **VERFAHREN ZUM KALIBRIEREN VON WIM-SENSOREN**
METHOD FOR CALIBRATING WIM-SENSORS
PROCÉDÉ POUR ÉTALONNER DES DÉTECTEURS WIM

(30) Priorität: 01.04.2010 CH 486102010
(43) Veröffentlichungstag der Anmeldung: 06.02.2013
(73) Patentinhaber: Kistler Holding AG, 8408 Winterthur (CH)
(72) Erfinder: HOFMANN, Adrian, CH-8464 Ellikon am Rhein (CH); CORNU, David, CH-8404 Winterthur (CH); CALDERARA, Reto, CH-8312 Winterberg (CH)
(86) Internationale Anmeldenummer: PCT/CH2011/000060
(87) Internationale Veröffentlichungsnummer: WO 2011/120176

(56) Entgegenhaltungen:
- EP-A2- 1 780 524
- WO-A1-2009/109158
- DE-C1- 4 218 929
- DE-C1- 10 115 490
- US-A- 5 065 618

## Beschreibung

### Technisches Gebiet

Die Erfindung betrifft ein Verfahren zum Kalibrieren eines in einer Strasse eingebauten WIM (Weigh-in-Motion) Sensors, der zur Bestimmung des dynamischen und/oder statischen Gewichts eines Fahrzeuges geeignet ist, während es den WIM-Sensor überquert.

### Stand der Technik

Typische WIM Systeme umfassen zwei Induktionsschleifen für die Klassifizierung von Fahrzeugen sowie zwei Reihen von WIM-Sensoren, welche etwa 4m beabstandet voneinander in einer Strasse eingebaut sind. Die WIM-Sensoren erfassen auf Grund der Lasten, die vom Fahrzeug über die einzelnen Räder jeweils auf die Strasse resp. auf den Sensor übertragen werden, Signale. Mit Hilfe von ermittelten Kalibrierfaktoren oder Kalibrierfunktionen werden schliesslich diese Signale in statische oder dynamische Lasten umgerechnet. Es hat sich gezeigt, dass die dynamischen Lasten von den statischen Lasten abweichen können, dies vor allem bedingt durch die Aerodynamik der Fahrzeuge und deren Federzustand. Um ein Gewicht eines Fahrzeuges zu ermitteln, werden schliesslich die einzeln ermittelten Lasten aller Räder, die diesem Fahrzeug zugeordnet werden, aufsummiert. Entsprechendes gilt für Fahrzeuge mit Anhängen. Um die Genauigkeit zu erhöhen, werden teilweise mehrere solche WIM Systeme hintereinander angebracht und die ermittelten Messwerte ausgewertet.

WIM Sensoren werden wenn möglich auf geraden Streckenabschnitten eingebaut, wo sie von Fahrzeugen bei möglichst ruhiger Fahrt überquert werden. Die Fahrzeuge sollten insbesondere nicht durch Kurven, Steigungen oder Gefälle oder durch Bodenwellen aufgeschaukelt werden, da dies die Messung verfälschen würde.

Die Messdaten gelangen in eine WIM-Auswerteeinheit, die typischerweise in einem Schrank am Strassenrand untergebracht ist. Von da aus werden sie über Leitungen und/oder über Sendeantennen zu einer Überwachungsstation geleitet, wo zuständige Personen schliesslich die erforderlichen Massnahmen einleiten, wenn beispielsweise erlaubte Gewichte überschritten werden. Die Messdaten geben vor allem auch Aufschluss auf die Last, die auf die Strasse wirkt, um beispielsweise Belagsarbeiten rechtzeitig vornehmen zu können, bevor grosse Schäden auftreten.

In der DE 10115490 wird eine Eichung einer Überfahrwaage für Schienenfahrzeuge beschrieben. Dazu wird ein Reterenafahrzeug, das mit Fahrzeugwägevorrichtungen oberhalb eines jeden Rades versehen ist, statisch genau verwegen. Anschliessend überfährt das Referenzfahrzeug die Überfahrwaage. Diese besteht aus einen Schienenanschnitt mit integrierten Messstrecken, in denen die Last dynamisch erfasst und an eine Auswerteeinheit übermittelt werden kann. Für die Eichung werden schliesslich die am Referenzfahrzeug statisch ermittelten Gewichte mit den dynamisch ermittelten Schienenlasten abgeglichen. Auch hier werden dynamische Lasten durch statische Lasten geeicht, wie eingangs beschrieben. Die Fehler, bedingt durch Aerodynamik der Fahrzeuge und deren Federzustand, treten auch hier auf.

In der WO 2009/103158 A1 wird ein Kalibrierverfahren von Sensoren zur Messung von dynamischen Rad- oder Achslasten auf der Strasse beschrieben. Auch hier werden die Messsignale dieser Sensoren, die während einer Überfahrt eines Kalibrierfahrzeuges erfasst werden, mit den vorab erfassten verwobenen Rad- oder Achslasten abgeglichen.

Die WIM-Sensoren müssen von Zeit zu Zeit neu kalibriert werden, um zuverlässig die Gewichte der Fahrzeuge zu bestimmen, von denen sie überquert werden. Heute wird eine solche Kalibrierung mit einem statisch gewogenen Lastwagen durchgeführt. Dieser überquert zwischen 10 und 70 mal die zu kalibrierende Messstelle, um statistische Sicherheit gegen zufällige Schwankungen zu erhalten. Diese Schwankungen stammen in der Regel vom Federverhalten des Fahrzeuges.

Dieser Prozess ist sehr aufwändig und teuer und wird für jede WIM-Messstelle etwa einmal jährlich durchgeführt.

### Darstellung der Erfindung

Aufgabe der vorliegenden Erfindung ist es, ein neues Kalibrierverfahren zu beschreiben, das einfacher und schneller durchgeführt werden kann und das eine erhöhte Genauigkeit aufweist als das bisher bekannte Verfahren. Zudem ist es erwünscht, die Güte der Anfahrtstrecke vor dem Sensor zu überprüfen,' da sie mit der Genauigkeit der Messung in direktem Zusammenhang steht.

Die Erfindung wird durch ein Verfahren gemäss den Kennzeichen des Hauptanspruchs gelöst. Der Erfindungsgedanke besteht darin, dass der WIM-Sensor vom einem Kalibrierfahrzeug überquert wird, das mit mindestens einem Messrad ausgestattet ist. Während der Fahrt wird am Messrad direkt die dynamische Radkraft auf die Strasse und auf den WIM Sensor gemessen, zeit- oder ortsabhängig. Die ermittelten Radkraftdaten werden anschliessend an eine Auswerteeinheit übermittelt. Gleichzeitig werden zudem bei der Überquerung des Kalibrierfahrzeuges WIM-Signaldaten am WIM-Sensor gemessen und an die Auswerteeinheit bermittelt. In dieser werden schliesslich die Radkraftdaten mit den WIM-Signaldaten synchronisiert. Auf Grund des Vergleichs der dynamischen Radkraftdaten mit den WIM-Signaldaten wird eine Kalibrierfunktion bestimmt, welche schliesslich für die Kalibrierung des WIM Sensors verwendet wird.

Dieses Verfahren ermöglicht eine Kalibrierung der WIM-Sensoren nach nur einer Überquerung. Weitere vorteilhafte Weiterentwicklungen sind in den Unteransprüchen angegeben.

### Kurze Beschreibung der Zeichnungen

Im Folgenden wird die Erfindung unter Beizug der Zeichnungen näher erklärt. Es zeigen
- Fig. 1: eine schematische, erfindungsgemässe Darstellung eines Kalibrierfahrzeuges vor einer Überquerung eines WIM-Sensors;
- Fig. 2: schematische Darstellungen von (a) dynamischen Radkraftdaten, (b) WIM-Signaldaten, (c) einer statischer Radkraft und (d) einer Kalibrierfunktion.

### Wege zur Ausführung der Erfindung

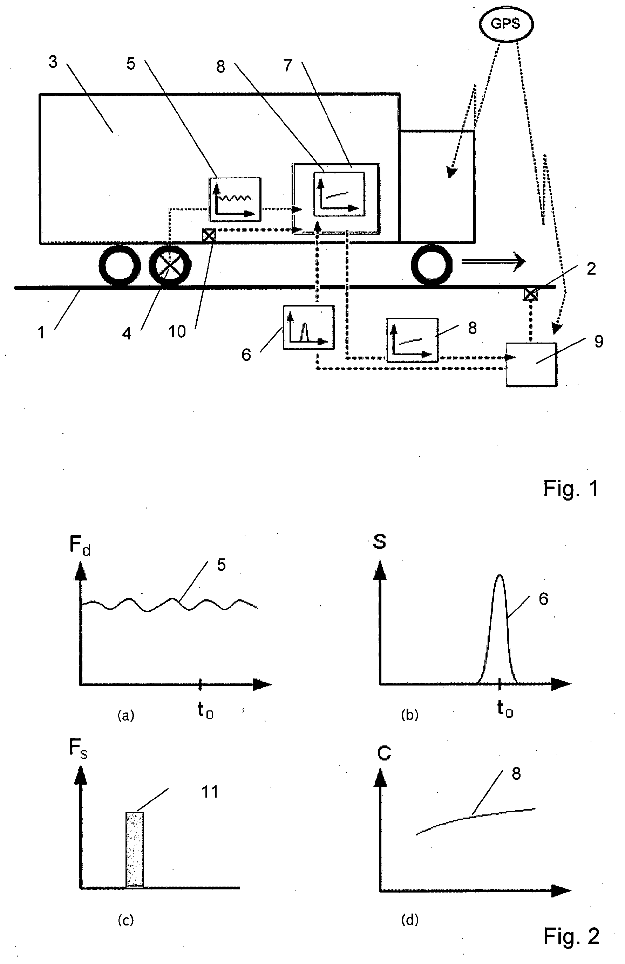

Die Fig. 1 zeigt eine Strasse 1 mit einem darin eingebauten WIM-Sensor 2 (Weigh In Motion), der mit einer WIM-Auswerteeinheit 9 verbunden ist. Auf der Strasse 1 ist ein Kalibrierfahrzeug 3 dargestellt, hier in Form eines Lastwagens. Die Pfeilrichtung gibt die Fahrrichtung des Kalibrierfahrzeuges 3 an.

Der WIM-Sensor 2 misst jeweils das dynamische Signal S eines Fahrzeuges 3, bei dessen Überfahrt, die zeitabhängigen WIM-Signaldaten 6. Nach der Messung werden sie an die WIM-Auswerteeinheit 9 weitergegeben und dort gegebenenfalls verstärkt, ausgewertet und/oder in anderer Form aufbereitet.

Mindestens eines der Räder des Kalibrierfahrzeuges 3 ist mit einem Messrad 4 ausgestattet, das es erlaubt, während der Fahrt die dynamische Radkraft zu ermitteln, die jeweils auf die Strasse resp. auf den WIM Sensor wirkt. Diese Radkraftdaten 5 können zeit- oder ortsabhängig gemessen werden. Auch diese Daten 5 können verstärkt, ausgewertet und/oder in anderer Form aufbereitet werden.

Beide Datensätze, die WIM-Signaldaten 6 und die Radkraftdaten 5, werden zu einer Kalibrier-Auswerteeinheit 7 übertragen. Diese Auswerteeinheit 7 kann im Kalibrierfahrzeug 3 oder in einer stationären Einrichtung sein. In dieser Auswerteeinheit 7 werden die beiden Datensätze 5, 6 synchronisiert. Unter Verwendung eines Vergleichs dieser beiden Datensätze 5, 6 wird schliesslich eine Kalibrierfunktion 8 bestimmt, welche zur Kalibrierung des WIM-Sensörs dient. Zusätzlich können weitere Daten in die Bestimmung der Kalibrierfunktion 8 einfliessen. Dies können insbesondere Korrekturfaktoren sein, welche Unterschiede zwischen der dynamischen und der statischen Radkraft berücksichtigen. Solche Korrekturfaktoren können beispielsweise auf Grund von Erfahrungswerten bestimmt werden oder auf Grund von der effektiv gemessenen statischen Radkraft vom Messrad 4.

Ein Messrad ist ein rotierendes Radkraft-Dynamometer und bildet eine Einheit aus Messzellen und felgen- und nabenseitiger Adaption, die in sich starr ist. Die Einheit selbst dreht sich mit der Nabe, die Übertragung der Messdaten erfolg entweder per Telemetrie oder über einen Schleifring. Ein Messrad misst die auftretenden Kräfte direkt und sehr präzise, was eine notwendige Voraussetzung ist zum Kalibrieren von WIM-Sensoren. In der Regel muss ein Kalibrierinstrument eine deutlich höhere Genauigkeit aufweisen wie das zu kalibrierende Messinstrument.

Anstelle der direkten Radkraftmessung durch ein Messrad könnte beispielsweise indirekt über eine Reifendruckmessung auf die Radkraft geschlossen werden. Allerdings kann die erforderliche Genauigkeit für die vorliegende Kalibrierung nicht erreicht werden. Eine weitere Alternative umfasst Radnabenmessungen oder Achsdeformationsmessungen, die allerdings fahrzeugseitig angebracht werden müssen. Dies bedingt, dass das Kalibrierfahrzeug stets selbst kalibriert werden muss, bevor es eingesetzt werden kann. Im Fall der Verwendung eines Messrades muss nur das Messrad selbst kalibriert werden. Danach kann es an jedes von der Grösse her passende Fahrzeug angebracht werden und liefert sofort hochpräzise Daten. So können WIM Sensoren mit verschiedenen Fahrzeugen resp. Anhängern lastabhängig kalibriert werden, indem nur das Messrad ummontiert werden muss.

In Fig. 2 sind in (a) die dynamischen Radkraftdaten 5 und in (b) die WIM-Signaldaten 6 dargestellt. Die dynamischen Radkraftdaten 5 geben eine zeit- oder ortsabhängige Funktion der Radkraften an, die vor, während und nach der Überfahrt am WIM-Sensor 2 gemessen werden. Die Werte F_{d} sind im wesentlichen konstant, unterliegen aber kleinen Schwankungen, die vom Strassenbelag aber auch von unterschiedlichen Windverhältnissen im Zusammenhang mit der Aerodynamik des Fahrzeuges verursacht werden. Gleichzeitig mit dem Aufnehmen der Radkraftdaten 5 wird ein GPS Signal empfangen und abgespeichert, welches entweder den jeweiligen genauen Ort des Messrades 4 oder die jeweiligen genauen Zeiten aller ermittelten Radkraftdaten 5 liefert.

Dasselbe GPS Signal wird auch bei den WIM-Signaldaten 6 empfangen und abgespeichert. Das WIM-Signal S in Fig. 2 (b) ist stets zeitabhängig und ist jeweils null, abgesehen von der Zeitspanne, während es von einem Fahrzeugrad überquert wird. Bei diesem Ereignis steigt die Last jeweils schnell zu einen Maximum an und fällt nach Verlassen des Fahrzeugrades wieder auf null zurück.

Bei der Synchronisation kann einerseits bei der Erfassung beider Messdatensätze 5, 6 das GPS-Zeitsignal miterfasst werden und dann der Zeitpunkt t₀ ermittelt werden, an dem der WIM-Sensor 2 vom Messrad 4 überquert wird. Zu diesem Zeitpunkt t₀ ist das WIM-Messsignal S beispielsweise maximal, bei einem schmalen WIM-Sensor 2. Bei der Synchronisation wird dann entsprechend die dynamische Radkraft F_{d} bestimmt, welche zum Zeitpunkt t₀ ermittelt wurde.

Andererseits kann für die Synchronisation zusammen mit der Erfassung der dynamischen Radkraftdaten F_{d} das jeweilige GPS-Ortssignal beim Messrad 4 miterfasst werden. Zudem wird das GPS-Ortssignal des stationären WIM-Sensor 2 erfasst. Die Radkraftdaten F_{d}, die schliesslich an dem Ort gemessen wurden, wo der stationäre WIM-Sensor 2 dasselbe GPS-Ortssignal empfängt, werden entsprechend für die Kalibrierung verwendet. Diese Radkraftdaten F_{d} werden ebenfalls exakt zum Zeitpunkt t₀ der Überfahrt über den WIM-Sensor 2 gemessen.

Die Kalibrierfunktion 8 kann schliesslich unter Verwendung des Vergleichs der gemessenen dynamischen Radkraft F_{d} beim Überqueren des WIM-Sensors 2 mit dem gemessenen Signal S auf dem WIM-Sensor, verursacht durch das Messrad, bestimmt werden. Das Resultat sind Kalibrierwerte C, die ein konstanter Wert sein können oder eine Funktion, beispielsweise eine Funktion der Last. In Fig. 2 (d) sind mögliche Kalibrierwerte C als Funktion der Last dargestellt.

In Fig. 2 (c) ist schliesslich die statische Radkraft 11 des Messrades 4 angegeben. Dies ist ein skalare Wert Fₛ und kann beispielsweise durch eine Waage ermittelt werden oder durch das Messrad selbst, in ruhenden Zustand.

Differenzen zwischen der dynamischen Radkraft F_{d} und der statischen Radkraft Fₛ können beispielsweise durch die Aerodynamik des Fahrzeuges zustande kommen. Unter Einbezug dieser Unterschiede in die Kalibrierdaten C werden auf Grund von WIM-Signalmessungen auf die statische Last eines Fahrzeuges 3 geschlossen. Dieses ist entscheidend, wenn überladene Fahrzeuge 3 ermittelt werden sollen. Wenn aber die gesamte Belastung einer Strasse ermittelt werden soll, beispielsweise zur Feststellung des Renovationsbedarfes, so ist eher die dynamische Last von Interesse. Es ist auch möglich, zwei Kalibrierfunktionen abzulegen um gleichzeitig auf statische und dynamische Lasten schliessen zu können, die dann entsprechend verwendet werden.

Die ermittelten Datensätze 5, 6, 11 können jeweils im Kalibrierfahrzeug 3 resp. in der WIM-Auswerteeinheit 9 gespeichert und später zu einer gemeinsamen Auswerteeinheit 7 geführt werden, wo sie schliesslich ausgewertet werden. Bequemer ist allerdings das Zusammenführen der Datensätze 5, 6, 11 während oder unmittelbar nach der Überquerung, indem mindestens einer der Datensätze 5, 6 berührungslos zur Auswerteeinheit 7 übertragen wird. Wenn sich diese im Kalibrierfahrzeug 3 befindet, müssten die WIM-Signaldaten berührungslos ins Kalibrierfahrzeug 3 übertragen werden. Nach Ermittlung der Kalibrierfunktion 8 kann diese dann vorzugsweise ebenfalls berührungslos in die WIM-Auswerteeinheit 9 übertragen werden, wo sie ab dann für spätere Messungen zur Verfügung steht.

Untersuchungen haben ergeben, dass die Güte der Anfahrtstrecke 1 vor dem WIM-Sensor von grosser Bedeutung ist für die Messgenauigkeit der WIM-Messdaten 6. Schlaglöcher oder Unebenheiten der Strasse können ein Fahrzeug 3 aufschaukeln und die Messung stark verfälschen. Daher ist es wünschenswert, eine Aussage über den Strassenzustand in der Anfahrstrecke machen zu können. Zu diesem Zweck hat es sich als hilfreich erwiesen, am Kalibrierfahrzeug 3 zusätzliche Daten, den Strassenzustand betreffend, zu ermitteln. Diese zusätzlichen Daten können beispielsweise mit dem Messrad 4 ermittelt werden oder mit zusätzlichen Sensoren 10, welche am Kalibrierfahrzeug 3 angebracht sind. Beispiele für solche zusätzliche Sensoren sind insbesondere Distanzmesser, Beschleunigungssensoren und/oder Federwegmesssensoren. Diese können feststellen, wie ruhig, gleichmässig und beschleunigungsfrei in vertikaler Richtung die Anfahrt verläuft. Beim Feststellen von Ungleichmässigkeiten können entsprechende Massnahmen eingeleitet werden, beispielsweise Belagsarbeiten.

Es hat sich gezeigt, dass die erfindungsgemässe Kalibriermethode viel einfacher, schneller und billiger ist als die herkömmliche Methode. In der Regel reichen eine bis zwei Messungen aus. Die Messung muss allenfalls wiederholt werden, wenn äussere Bedingungen wie Spurrillen die Messung verfälscht haben. Dies zeigt sich in einer überproportionalen Erhöhung der Radkraftdaten 5 zum Zeitpunkt der Überfahrt des WIM-Sensors verglichen mit den Daten bei der Anfahrt zu diesem.

### Bezugszeichenliste

- 1: Strasse
- 2: WIM-Sensor (Weigh-in-Motion Sensor)
- 3: Fahrzeug, Kalibrierfahrzeug
- 4: Messrad
- 5: Radkraftdaten F_{d}
- 6: WIM-Signaldaten S
- 7: Auswerteeinheit, Kalibrier-Auswerteeinheit
- 8: Kalibrierfunktion, Kalibrierdaten C
- 9: WIM-Auswerteeinheit
- 10: Weitere Sensoren
- 11: Statische Radkraft Fₛ

## Patentansprüche

1. Verfahren zum Kalibrieren eines in einer Strasse (1) eingebauten WIM (Weigh in Motion) Sensors (2), der zur Bestimmung des dynamischen und/oder statischen Gewichts eines Fahrzeuges (3) geeignet ist, während es den WIM Sensor (2) überquert, wobei der WIM Sensor (2) von einem Kalibrierfahrzeug (3) überquert wird, das mit mindestens einem Messrad (4), einem rotierenden Radkraft- Dynamometer, das sich mit der Nabe dreht, ausgestattet ist, wobei das Messrad (4) eine in sich starre Einheit aus Messzellen und felgen- und nabenseitiger Adaption bildet, welche Einheit selbst sich mit der Nabe dreht, wobei am Messrad (4) während der Fahrt direkt die dynamische Radkraft auf die Strasse (1) und auf den WIM Sensor (2) zeit- oder ortsabhängig gemessen wird, wobei das Messrad (4) die dynamische Radkraft mit einer deutlich höheren Genauigkeit misst als die mit der WIM Sensor (2) das dynamische und/oder statische Gewicht eines Fahrzeuges (3) misst, wobei gemessene Radkraftdaten (5) an eine Auswerteeinheit (7) übermittelt werden, wobei zudem bei der Überquerung des Kalibrierfahrzeuges (3) am WIM-Sensor (2) WIM Signaldaten (6) gemessen und an die Auswerteeinheit (7) übermittelt werden, und wobei die Radkraftdaten (5) mit den WIM-Signaldaten (6) synchronisiert werden und auf Grund des Vergleichs der Radkraftdaten (5) mit den WIM Signaldaten (6) eine Kalibrierfunktion (8) bestimmt und für die Kalibrierung des WIM Sensors (2) verwendet wird.

2. Verfahren nach Anspruch 1, **dadurch gekennzeichnet, dass** zudem auch die statische Radkraft R vom Messrad (4) auf eine Strasse (1) ermittelt und in die Bestimmung der Kalibrierfunktion (8) mit einbezogen wird.

3. Verfahren nach Anspruch 1 oder 2, **dadurch gekennzeichnet, dass** die Synchronisation mittels einer empfangenen GPS-Zeit und/oder GPS-Position durchgeführt wird.

4. Verfahren nach einem der vorhergehenden Ansprüche, **dadurch gekennzeichnet, dass** die Radkraftdaten (5) und/oder die WIM-Signaldaten (6) berührungslos zur Auswerteeinheit (7) übertragen werden.

5. Verfahren nach einem der vorhergehenden Ansprüche, **dadurch gekennzeichnet, dass** am Kalibrierfahrzeug (3) im Bereich vor der Überfahrt des WIM-Sensors (2) zusätzliche Daten den Strassenzustand betreffend ermittelt werden.

6. Verfahren nach Anspruch 5, **dadurch gekennzeichnet, dass** die zusätzlichen Daten mit dem Messrad (4) oder mit zusätzlichen am Kalibrierfahrzeug (3) angebrachten Sensoren (10), insbesondere Distanzmessern, Beschleunigungssensoren und/oder Federwegmesssensoren ermittelt werden.

## Claims

1. A method for calibrating a WIM (Weigh in Motion) sensor (2) embedded in a road (1), the sensor being suitable for determining the dynamic and/or static weight of a vehicle (3) as it passes over the WIM sensor (2), wherein said WIM sensor (2) is passed over by a calibration vehicle (3) equipped with at least one measuring wheel (4) being a rotating wheel force dynamometer which rotates with the hub, wherein said measuring wheel (4) is an inherently rigid entity of measuring cells and adaptation on the rim and hub sides, said entity itself rotating with the hub, wherein at said measuring wheel (4) during travel the dynamic wheel force onto the road (1) and onto said WIM sensor (2) is measured directly in a time- or location-dependent manner, wherein the measuring wheel (4) measures the dynamic wheel force with a considerably higher precision than that with which the WIM sensor (2) measures the dynamic and/or static weight of a vehicle (3), wherein measured wheel force data (5) are transmitted to an evaluating unit and in addition, as the calibration vehicle (3) passes over, WIM signal data (6) are measured at the WIM sensor (2) and are transmitted to the evaluating unit, and wherein said wheel force data (5) are synchronized with said WIM signal data (6) and on the basis of said comparison of the wheel force data (5) with the WIM signal data (6) a calibration function (8) is determined and is used to calibrate the WIM sensor (2).

2. The method according to claim 1 **characterized in that** also the static wheel force R on a road is determined by the measuring wheel (4) and is included in the determination of the calibration function (8).

3. The method according to claim 1 or 2 **characterized in that** said synchronization is carried out by means of a GPS time and/or GPS position received.

4. The method according to any of the preceding claims **characterized in that** the wheel force data (6) and/or the WIM signal data (6) are transmitted to the evaluating unit (7) in a contactless manner.

5. The method according to any of the preceding claims **characterized in that** additional data concerning the road condition are detected on the calibration vehicle (3) in the interval before the passage over the WIM sensor (2).

6. The method according to claim 5 **characterized in that** said additional data is detected by means of the measuring wheel (4) or by additional sensors (10) that are mounted on the calibration vehicle (3), in particular distance meters, acceleration sensors and/or spring travel measuring sensors.

## Revendications

1. Un procédé pour l'étalonnage d'un capteur (2) WIM (Weigh in Motion - pesage en mouvement) intégré dans une chaussée (1) et apte à déterminer le poids dynamique et/ou statique d'un véhicule (3) alors qu'il traverse le capteur WIM (2) dans lequel ledit capteur WIM (2) est traversé par un véhicule d'étalonnage (3) équipé d'au moins une roue de mesure (4), un dynamomètre de forces de roues rotatif qui tourne avec le moyeu, roue de mesure (4) qui est une unité rigide en soi de cellules de mesure et de adaptations côté jante et côté moyeu, unité lui-même tournant avec le moyeu, et sur lequel on mesure directement pendant le trajet la force de roue dynamique exercée sur la chaussée (1) ainsi que sur le capteur WIM (2) en fonction du temps ou du lieu, ledit roue de mesure (4) mesurant la force de roue dynamique avec une précision bien meilleure que celle avec laquelle le capteur WIM (2) mesure le poids dynamique et/ou statique d'un véhicule (3), et dans lequel on transmet les données de force de roue (5) mesurées à une unité d'analyse (7) et en outre pendant le passage du véhicule d'étalonnage (3) sur le capteur WIM (2) des données de signal WIM (6) sont mesurées et transmises à l'unité d'analyse (7), lesdites données de force de roue (5) étant synchronisées avec les données de signal WIM (6) et, sur la base de la comparaison des données de force de roue (5) avec les données de signal WIM (6), on détermine une fonction d'étalonnage (8) qui est utilisée pour l'étalonnage du capteur WIM (2).

2. Procédé selon la revendication 1, **caractérisé en ce que** en outre la force de roue statique R sur une chaussée est également déterminée par la roue de mesure (4) et est incluse dans la détermination de la fonction d'étalonnage (8).

3. Procédé selon la revendication 1 ou 2, **caractérisé en ce que** ladite synchronisation s'effectue au moyen d'un temps GPS et/ou d'une position GPS reçus.

4. Procédé selon l'une quelconque des revendications précédentes, **caractérisé en ce que** les données de force de roue (5) et/ou les données de signal WIM (6) sont transmises à l'unité d'évaluation (7) de manière sans contact.

5. Procédé selon l'une quelconque des revendications précédentes, **caractérisé en ce que** des données supplémentaires concernant l'état de la chaussée sont détectées sur le véhicule d'étalonnage (3) dans l'intervalle avant le passage sur le capteur WIM (2).

6. Procédé selon la revendication 5, **caractérisé en ce que** lesdites données supplémentaires sont détectées au moyen de la roue de mesure (4) ou par des capteurs supplémentaires (10) montés sur le véhicule d'étalonnage (3), en particulier les mesureurs de distance, les capteurs d'accélération et/ou des capteurs de mesure de débattement.
